# EUROPEAN PATENT SPECIFICATION

(11) **EP 2 426 871 B1**
(45) Date of publication and mention of the grant of the patent: **11.09.2013**
(21) Application number: 09843927.6
(22) Date of filing: 25.12.2009
(51) Int. Cl.: H04L 12/801

(54) **METHOD AND DEVICE FOR SCHEDULING DATA COMMUNICATION INPUT PORTS**
VERFAHREN UND VORRICHTUNG ZUR TERMINPLANUNG VON DATENKOMMUNIKATIONS-EINGABEPORTS
PROCÉDÉ ET DISPOSITIF DE PROGRAMMATION DE PORTS D'ENTRÉE DE COMMUNICATION DE DONNÉES

(30) Priority: 30.04.2009 CN 200910107184
(43) Date of publication of application: 07.03.2012
(73) Proprietor: ZTE Corporation, Shenzhen, Guangdong 518057 (CN)
(72) Inventor: LIANG, Xiushuai, Shenzhen Guangdong 518057 (CN); LU, Zhuxing, Shenzhen Guangdong 518057 (CN)
(74) Representative: Regimbeau
(86) International application number: PCT/CN2009/076077
(87) International publication number: WO 2010/124516

(56) References cited:
- CN-A- 1 972 239
- CN-A- 101 547 150
- US-A1- 2003 174 701
- US-A1- 2003 227 926
- US-B1- 7 525 978
- LIAO YOUQING ET AL.: 'Multi-port Fair Scheduling Algorithm and Its Implementation in Router' CONTROL & MANAGEMENT vol. 22, no. 36, 25 December 2006, pages 228 - 230, XP008149221

## Description

### TECHNICAL FIELD

The present invention relates to the field of data communications, particularly to a method and device for scheduling data communication input ports.

### BACKGROUND

In the field of data communications, more and more input ports are included in communication devices along with the rapid development of data services. The bandwidths of these input ports are often different due to different demands. However, these input ports will be used by one processor simultaneously, resulting in overflow of a buffer area and data packet loss at the input port if the scheduling is improper and the input traffic of one port is larger than the polling processing capability of this port Therefore, how to schedule the input ports and prevent the problem of overflow of the buffer area is crucial for the improvement of service quality and equipment performance.

US2003/174701A1 provides method and apparatus for scheduling multicast data in an input-queued network device. According to one aspect of the present invention, deterministic and bounded delay for high priority multicast cells is guaranteed by the multicast scheduler. The scheduler receives a transmit request associated with each of a plurality of input ports. The transmit request identifies output ports to which pending multicast cells are ready to be transmitted, if any. Then, for each of multiple classes of service, the scheduler performs a single scheduling iteration. The single scheduling iteration includes a grant phase, an accept phase, and an update phase. During the grant phase, the scheduler grants one or more of the input ports access to the fabric by issuing grants based upon the transmit requests and a priority indicator that identifies an input port that is given scheduling priority for the scheduling iteration. During the accept phase, on behalf of each of the input ports, the scheduler accepts all grants corresponding to the input port. Finally, during the update phase, the scheduler updates the priority indicator for use in a subsequent scheduling cycle.

Input ports are scheduled in the prior art by using an equal time slice polling or a polling according to priority, and in the two ways, the buffer size for each input port is predefined and unchangeable.

In the equal time slice polling, the polling time slice of each input port is equally allocated according to a predefined polling period. If the bandwidths of these ports are identical, then both the corresponding buffer sizes of these ports and the input data traffic within each polling period are identical according to the buffer size allocated in direct proportion to the bandwidth, so that the overflow of the buffer area will not occur only by setting the processing capability of the polling time slice of each port larger than the input traffic of the port. But, in the actual operation, when the bandwidth of each input port is different, the buffer size for each port, allocated according to the direct proportion to the bandwidth, is different, and then the corresponding input data traffic is different too. Because the predefined port buffer cannot be changed, once the input data traffic of one port is larger than the processing capability of the polling time slice of this port, it is possible to cause the buffer overflow and data packet loss due to the insufficient polling rate and delayed processing.

For the polling according to the priority, the service is performed based on the priority, i.e., service first for high priority and then for low priority. But, like the equal time slice polling, when the bandwidths of the input ports having the same priority are different, the problem of the buffer overflow will arise too.

Therefore, how to overcome the defects of the above-mentioned methods and the devices thereof, and prevent the buffer overflow is the problem to be solved in the actual operation.

### SUMMARY

The technical problem to be solved by the present invention is to provide a method and device for scheduling data communication input ports to effectively solve the problems of buffer overflow and packet loss and to improve the performance of network processors.

To achieve the above-mentioned object, the present invention provides a device for scheduling data communication input ports, and the device comprises a resource preprocessing module, a port state monitoring module, a buffer resource allocating module, a time slice allocating module and a polling port module, wherein
the resource preprocessing module is used for setting priority of input ports and a proportion of time slices corresponding to the priority;
the port state monitoring module is used for monitoring a state of the input ports, acquiring a list of active input ports and bandwidths of the active input ports, and classifying the active input ports based on the list of the active input ports according to the priority set by the resource preprocessing module;
the buffer resource allocating module is used for allocating a buffer size for each active input port according to the priority of each active input port predefined by the resource preprocessing module and the acquired bandwidths of the active input ports;
the time slice allocating module is used for allocating a service time slice corresponding to each priority and each active input port; and
the polling port module is used for polling each active input port from high priority to low priority according to the service time slice of each active input port.

The present invention also provides a method for scheduling data communication input ports, the method comprises: setting priority of each active input port and time proportion corresponding to each priority; and the method further comprises:
monitoring a state of each input port, acquiring a list of active input ports, classifying the active input ports based on the list of the active input ports according to the priority, and acquiring the bandwidths of the active input ports;
allocating a buffer size for each active input port according to the priority of each active input port and the acquired bandwidths;
allocating a service time slice corresponding to each priority and each active input port; and
polling each active input port from high priority to low priority according to the final service time slice of each active input port.

In the allocation of buffer resource, the buffer sizes of the active input ports may be allocated according to a direct proportion to the bandwidths of the active input ports.

The allocation of the service time slice corresponding to each priority and each active input port may comprise:
a: calculating the service time slice occupied by each active input port in each priority according to a predefined priority time proportion; and
b: for the active input ports having the same priority, further calculating the service time slice of each active input port according to the bandwidth proportion of the active input port to the total bandwidth in the priority.

The priority of each active input port may be classified into high priority, medium priority and low priority.

The proportions of high priority, medium priority and low priority may be 50%, 40% and 10%, respectively.

The present invention is mainly to monitor the state of input ports, acquire the information about active input ports, dynamically allocate the buffer size for the active input ports according to the active input ports, calculate a time slice according to the bandwidth and priority of each active input port, and serve each active input port according to the priority of the active input ports and different time slices. With the above-mentioned method, the problems of buffer overflow and packet loss caused by the inconsistent bandwidths of the active input ports and insufficient polling rate are eliminated, thereby improving the performance of processors.

### BRIEF DESCRIPTION OF THE DRAWINGS

Fig. 1 shows a structural diagram of a device for scheduling data communication input ports according to the present invention;
Fig. 2 shows an overall flowchart of a method for scheduling data communication input ports according to the present invention; and
Fig. 3 shows a flowchart of a method for scheduling data communication input ports according to an embodiment of the present invention.

### DETAILED DESCRIPTION

The present invention will be described in detail hereinafter with reference to the drawings.

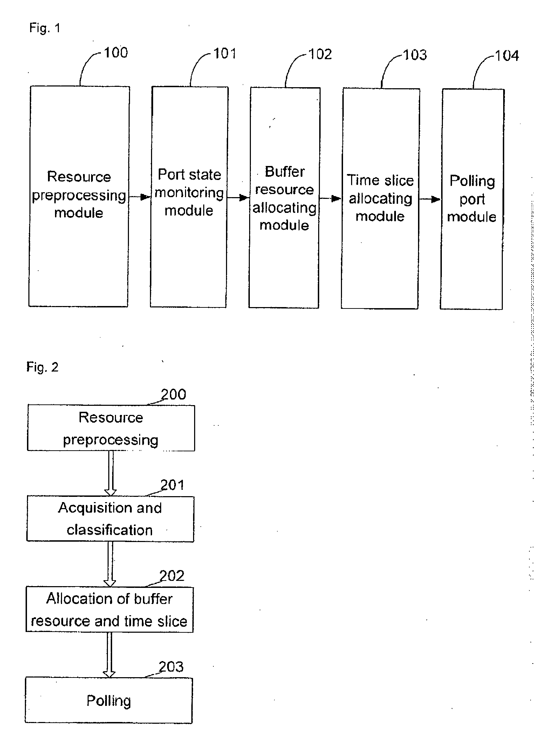

Fig. 1 shows a structural diagram of a device for scheduling data communication input ports according to the present invention. As shown in Fig. 1, the device comprises a resource preprocessing module, a port state monitoring module, a buffer resource allocating module, a time slice allocating module and a polling port module, wherein
the resource preprocessing module is used for setting priority of input ports and a proportion of time slices corresponding to the priority;
the port state monitoring module is used for monitoring a state of the input ports, acquiring information about the active input ports and bandwidths, and classifying the active input ports based on a list of active input ports according to the priority set by the resource preprocessing module;
the buffer resource allocating module is used for allocating a buffer size for each active input port according to the priority of each active input port predefined by the resource preprocessing module and the acquired bandwidths;
the time slice allocating module is used for allocating a service time slice corresponding to each priority and each active input port; and
the polling port module is used for polling each active input port from high priority to low priority according to the service time slice of each active input port.
Fig. 2 shows an overall flowchart of a method for scheduling data communication input ports according to the present invention. With reference to Fig. 1, the method for scheduling data communication input ports according to the present invention mainly comprises:
200: resource preprocessing, wherein the resource preprocessing module sets priority of each input port and time proportion corresponding to each priority;
201: acquisition and classification, wherein the port state monitoring module monitors a state of each input port, acquires a list of active input ports, classifies the active input ports based on the list of the active input ports according to the priority, and acquires the bandwidths of the active input ports;
202: allocation of buffer resource and time slice, wherein the buffer resource allocating module allocates a buffer size for each active input port according to the priority of each active input port and the acquired bandwidths, and the time slice allocating module allocates a service time slice corresponding to each priority and each active input port; and
203: polling, wherein the polling port module polls each active input port from high priority to low priority according to the final service time slice of each active input port.

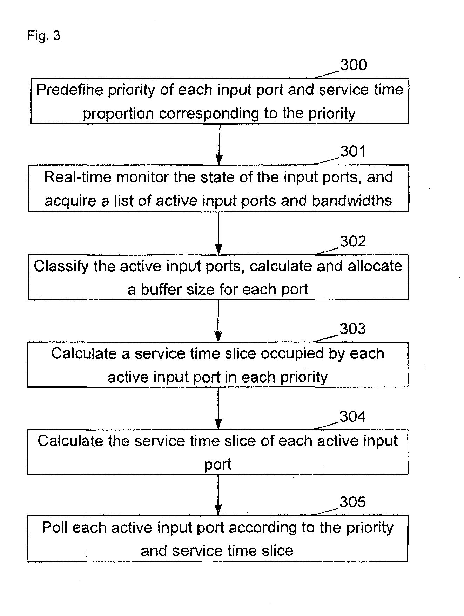

Fig. 3 shows an exemplified flowchart of a method for scheduling data communication input ports according to an embodiment of the present invention. As shown in Fig. 3, the embodiment specifically comprises the following steps: 300: the resource preprocessing module sets priority of each input port and
service time proportion corresponding to the priority, wherein it is provided that there are service time proportion corresponding to the priority, wherein it is provided that there are 10 input ports in total, with the input ports 1 to 4, 5 to 8 and 9 to 10 of high priority, medium priority and low priority, and the service time proportions of 50%, 40% and 10%, respectively; and the classification of the priority and service time proportion of the priority in other embodiments can also be predefined according to the actual needs, not limited to the method of this embodiment;
301: the port state monitoring module monitors the state of the input ports and acquires a list of active input ports, wherein, in this embodiment, the active input port refers to the enabled input port, for example, if only input ports 1, 2, 5, 7 and 9 of above 10 input ports are enabled, the list of the active input ports comprises #1, #2, #5, #7 and #9;
302: the buffer resource allocating module classifies the active input ports according to the list of the active input ports and the priority, acquires the bandwidths of the active input ports, and allocates the buffer size for each active input port based on the bandwidth of each active input port according to a direct proportion to the bandwidths of the active input ports;
   in the active input ports of step 301, this step comprises classification according to the priority, the list of the active input ports having high priority includes input ports 1 and 2, the list of the active input ports having medium priority includes input ports 5 and 7, and the list of the active input port having low priority includes input port 9; it is provided that the bandwidths of the active input ports acquired by searching the records about bandwidth information in the chips are 200M, 300M, 100M, 300M and 100M of the active input ports #1, #2, #5, #7 and #9, respectively; if the total buffer size is 100 bytes, the buffer size for active input port #1 is (2/10)*100=20 bytes and the buffer sizes of the active input ports #2 and #7 are (3/10)*100=30 bytes according to the calculation directly proportional to the bandwidths of the active input ports to allocate the buffer size; also, the buffer sizes of active input ports #5 and #9 are 10 bytes; and for the inactive input ports, there is no need to allocate buffer to most effectively utilize the buffer resource;
303: the time slice allocating module calculates a service time slice occupied by each active input port in each priority according to a predefined priority time proportion, wherein
   it is provided that each polling period is 120 clocks, the service time slices of high priority, medium priority and low priority are 120*50%=60 clocks, 120*40%=48 clocks and 120*10%=12 clocks, respectively, according to the time slice proportion corresponding to the aforementioned priority;
304: for the active input ports having the same priority, the time slice allocating module further calculates the service time slice of each active input port according to the bandwidth proportion of the active input port to the total bandwidth in the priority, wherein, according to the information acquired and calculated above, it is possible to calculate the time slice proportion of each port according to the proportion of the bandwidth of each active input port to the bandwidth sum of the active input ports of the same priority:
   active input port 1: [200M/(200M+300M)]=2/5;
   active input port 2: [300M/(200M+300M)]=3/5;
   active input port 5: [100/(100M+300M)]=1/4;
   active input port 7: [300/(100M+300M)]=3/4;
   active input port 9: 1/1=1;
   the calculation method is not limited to herein, and other calculation methods can also be used as needed;
   the time slice of each active input port is allocated according to the proportion, and the service time slices of the active input ports above are:
      active input port 1: (2/5)*60=24 clocks;
      active input port 2: (3/5)*60=36 clocks;
      active input port 5: (1/4)*48=12 clocks;
      active input port 7: (3/4)*48=36 clocks;
      active input port 9: 1*12=12 clocks;
it is assumed that each active input port can process a byte per clock, each of the active input ports #1, #2, #5, #7 and #9 can process 24, 36, 12, 36 and 12 bytes per period respectively, and larger than the input rates of the active input ports, 20, 30, 10, 30 and 10 bytes, so the problem of buffer overflow of the active input ports will not arise; and
305: the polling port module polls each active input port from high priority to low priority according to the final service time slice of each active input port.

From the embodiment, it can be seen that the present invention is mainly to monitor the state of input ports, acquire the information about the active input ports, dynamically allocate the buffer size for the active input ports according to the active input ports, calculate a time slice according to the bandwidth and priority of each active input port, and serve each active input port according to the priority of the active Input ports and different time slices. With the above-mentioned method, the problems of buffer overflow and packet loss caused by the inconsistent bandwidths of the active input ports and insufficient polling rate are eliminated, thereby improving the performance of processors.

## Claims

1. A device for scheduling data communication input ports, comprising a resource preprocessing module (100), a port state monitoring module (101), a buffer resource allocating module (102), a time slice allocating module (103) and a polling port module (104), wherein
the resource preprocessing module (100) is adapted to set priority of input ports and a proportion of time slices corresponding to the priority;
the port state monitoring module (101) adapted to monitor a state of the input ports, acquiring a list of active input ports and bandwidths of the active input ports, and classifying the active input ports based on the list of the active input ports according to the priority set by the resource preprocessing module (100);
the buffer resource allocating module (102) is adapted to allocate a buffer size for each active input port according to the priority of each active input port predefined by the resource preprocessing module (100) and the acquired bandwidths of the active input ports;
the time slice allocating module (103) is adapted to allocate a service time slice corresponding to each priority and each active input port; and
the polling port module (104) adapted to polli each active input port from high priority to low priority according to the service time slice of each active input port.

2. A method for scheduling data communication input ports, comprising: setting priority of each active input port and time proportion corresponding to each priority (300);
monitoring a state of each input port, acquiring a list of active input ports (301), classifying the active input ports in the list of the active input ports according to the priority (302), and acquiring the bandwidths of the active input ports (301);
allocating a buffer size for each active input port according to the priority of each active input port and the acquired bandwidths (302);
allocating a service time slice corresponding to each priority and each active input port (303-304); and
polling each active input port from high priority to low priority according to the final service time slice of each active input port (305).

3. The method for scheduling data communication input ports according to claim 2, wherein in the allocation of buffer resource, the buffer sizes of the active input ports are allocated according to a direct proportion to the bandwidths of the active input ports.

4. The method for scheduling data communication input ports according to claim 2, wherein the allocation of the service time slice corresponding to each priority and each active input port comprises:
a: calculating the service time slice occupied by each active input port in each priority according to a predefined priority time proportion; and
b: for the active input ports having the same priority, further calculating the service time slice of each active input port according to the bandwidth proportion of the active input port to the total bandwidth in the priority.

5. The method for scheduling data communication input ports according to claim 4, wherein the priority of each active input port can be classified into high priority, medium priority and low priority.

6. The method for scheduling data communication input ports according to claim 5, wherein the proportions of high priority, medium priority and low priority are 50%, 40% and 10%, respectively.

## Patentansprüche

1. Vorrichtung zum Disponieren von Datenkommunikations-Eingabeports, umfassend: ein Ressourcenvorverarbeitungs-Modul (100), ein Portzustandsüberwachungs-Modul (101), ein Pufferressourcenzuweisungs-Modul (102), ein Zeitschlitzzuweisungs-Modul (103) und ein AbfrageportModul (104), wobei
das Ressourcenvorverarbeitungs-Modul (100) dafür eingerichtet ist, die Priorität von Eingabeports und einen Anteil von Zeitschlitzen entsprechend der Priorität einzustellen;
das Portzustandsüberwachungs-Modul (101) dafür eingerichtet ist, einen Zustand der Eingabeports zu überwachen, eine Liste mit aktiven Eingabeports und Bandbreiten der aktiven Eingabeports zu beschaffen und die aktiven Eingabeports anhand der Liste der aktiven Eingabeports entsprechend der durch das Ressourcenvorverarbeitungs-Modul (100) eingestellten Priorität zu klassifizieren,
das Pufferressourcenzuweisungs-Modul (102) dafür eingerichtet ist, eine Puffergröße für jeden aktiven Eingabeport entsprechend der durch das Ressourcenvorverarbeitungs-Modul (100) vorgegebenen Priorität jedes aktiven Eingabeports und der beschafften Bandbreiten der aktiven Eingabeports zuzuweisen;
das Zeitschlitzzuweisungs-Modul (103) dafür eingerichtet ist, einen Dienstzeitschlitz entsprechend jeder Priorität und jedem aktiven Eingabeport zuzuweisen; und
das Abfrageportmodul (104) dafür eingerichtet ist, jeden aktiven Eingabeport von einer hohen Priorität zu einer niedrigen Priorität entsprechend dem Dienstzeitschlitz jedes aktiven Eingabeports abzufragen.

2. Verfahren zum Disponieren von Datenkommunikations-Eingabeports, umfassend:
- Einstellen der Priorität jedes aktiven Eingabeports und jedes Zeitanteils entsprechend jeder Priorität (300);
- Überwachen eines Zustands jedes Eingabeports, Beschaffen einer Liste mit aktiven Eingabeports (301), Klassifizieren der aktiven Eingabeports in der Liste der aktiven Eingabeports entsprechend der Priorität (302), und Beschaffen der Bandbreiten der aktiven Eingabeports (301);
- Zuweisen einer Puffergröße für jeden aktiven Eingabeport entsprechend der Priorität jedes aktiven Eingabeports und der beschafften Bandbreiten (302);
- Zuweisen eines Dienstzeitschlitzes entsprechend jeder Priorität und jedes aktiven Eingabeports (303-304); und
- Abfragen jedes aktiven Eingabeports von einer hohen Priorität zu einer niedrigen Priorität entsprechend dem letzten Dienstzeitschlitz jedes aktiven Eingabeports (305).

3. Verfahren zum Disponieren von Datenkommunikations-Eingabeports nach Anspruch 2, wobei beim Zuweisen von Pufferressourcen die Puffergrößen der aktiven Eingabeports gemäß einem direkten Anteil zu den Bandbreiten der aktiven Eingabeports zugewiesen werden.

4. Verfahren zum Disponieren von Datenkommunikations-Eingabeports nach Anspruch 2, wobei die Zuweisung der Dienstzeitschlitze entsprechend jeder Priorität und jedem aktiven Eingabeport Folgendes umfasst:
a: Berechnen des Dienstzeitschlitzes, der durch jeden aktiven Eingabeport in jeder Priorität belegt wird, gemäß einem vorgegebenen Prioritätszeitanteil; und
b: für die aktiven Eingabeports mit der gleichen Priorität, des Weiteren Berechnen des Dienstzeitschlitzes jedes aktiven Eingabeports entsprechend dem Bandbreitenanteil des aktiven Eingabeports zur Gesamtbandbreite in der Priorität.

5. Verfahren zum Disponieren von Datenkommunikations-Eingabeports nach Anspruch 4, wobei die Priorität jedes aktiven Eingabeports in eine hohe Priorität, eine mittlere Priorität und eine niedrige Priorität klassifiziert werden kann.

6. Verfahren zum Disponieren von Datenkommunikations-Eingabeports nach Anspruch 5, wobei die Anteile von hoher Priorität, mittlerer Priorität und niedriger Priorität 50 %, 40 % bzw. 10 % betragen.

## Revendications

1. Dispositif de programmation de ports d'entrée de communication de données, comprenant un module de prétraitement de ressource (100), un module de surveillance d'état de port (101), un module d'attribution de ressource de mémoire tampon (102), un module d'attribution de tranche de temps (103) et un module d'interrogation de port (104), dans lequel
le module de prétraitement de ressource (100) est adapté pour définir une priorité de ports d'entrée et un rapport de tranches de temps correspondant à la priorité ;
le module de surveillance d'état de port (101) est adapté pour surveiller un état des ports d'entrée, acquérir une liste des ports d'entrée actifs et des largeurs de bande des ports d'entrée actifs, et classer les ports d'entrée actifs sur la base de la liste des ports d'entrée actifs selon la priorité définie par le module de prétraitement de ressource (100) ;
le module d'attribution de ressource de mémoire tampon (102) est adapté pour attribuer une taille de mémoire tampon à chaque port d'entrée actif selon la priorité de chaque port d'entrée actif prédéfinie par le module de prétraitement de ressource (100) et les largeurs de bande acquises des ports d'entrée actifs ;
le module d'attribution de tranche de temps (103) est adapté pour attribuer une tranche de temps de service correspondant à chaque priorité et à chaque port d'entrée actif ; et
le module d'interrogation de port (104) est adapté pour interroger chaque port d'entrée actif de la priorité haute à la priorité basse selon la tranche de temps de service de chaque port d'entrée actif.

2. Méthode de programmation de ports d'entrée de communication de données, comprenant :
la définition d'une priorité pour chaque port d'entrée actif et d'un rapport de temps correspondant à chaque priorité (300) ;
la surveillance d'un état de chaque port d'entrée, l'acquisition d'une liste de ports d'entrée actifs (301), le classement des ports d'entrée actifs dans la liste des ports d'entrée actifs selon la priorité (302), et l'acquisition des largeurs de bande des ports d'entrée actifs (301) ;
l'attribution d'une taille de mémoire tampon à chaque port d'entrée actif selon la priorité de chaque port d'entrée actif et les largeurs de bande acquises (302) ;
l'attribution d'une tranche de temps de service correspondant à chaque priorité et à chaque port d'entrée actif (303-304) ; et
l'interrogation de chaque port d'entrée actif de la priorité haute à la priorité basse selon la tranche de temps de service finale de chaque port d'entrée actif (305).

3. Méthode de programmation de ports d'entrée de communication de données selon la revendication 2, dans laquelle au cours de l'attribution de ressource de mémoire tampon, les tailles de mémoire tampon des ports d'entrée actifs sont attribuées selon un rapport direct aux largeurs de bande des ports d'entrée actifs.

4. Méthode de programmation de ports d'entrée de communication de données selon la revendication 2, dans laquelle l'attribution de la tranche de temps de service correspondant à chaque priorité et à chaque port d'entrée actif comprend :
a : le calcul de la tranche de temps de service occupée par chaque port d'entrée actif dans chaque priorité selon un rapport de temps de priorité prédéfini ; et
b : pour les ports d'entrée actifs ayant la même priorité, le calcul supplémentaire de la tranche de temps de service de chaque port d'entrée actif selon le rapport de la largeur de bande du port d'entrée actif à la largeur de bande totale dans la priorité.

5. Méthode de programmation de ports d'entrée de communication de données selon la revendication 4, dans laquelle la priorité de chaque port d'entrée actif peut être classée selon une priorité haute, une priorité moyenne et une priorité basse.

6. Méthode de programmation de ports d'entrée de communication de données selon la revendication 5, dans laquelle les rapports de la priorité haute, de la priorité moyenne et de la priorité basse sont 50 %, 40 % et 10 %, respectivement.
